# EUROPEAN PATENT SPECIFICATION

(11) **EP 3 926 997 B1**
(45) Date of publication and mention of the grant of the patent: **31.01.2024**
(21) Application number: 21179738.6
(22) Date of filing: 16.06.2021
(51) Int. Cl.: H04W 16/14

(54) **METHOD AND DEVICE OF OPERATING DISTRIBUTED ANTENNA SYSTEM INTERWORKING WITH SPECTRUM SHARING SYSTEM**
VERFAHREN UND VORRICHTUNG ZUM BETRIEB EINES VERTEILTEN ANTENNENSYSTEMS IN ZUSAMMENARBEIT MIT EINEM SPEKTRUMSTEILUNGSSYSTEM
PROCÉDÉ ET DISPOSITIF DE FONCTIONNEMENT D'UN SYSTÈME D'ANTENNE DISTRIBUÉ INTERFONCTIONNANT AVEC UN SYSTÈME DE PARTAGE DE SPECTRE

(30) Priority: 16.06.2020 KR 20200073296
(43) Date of publication of application: 22.12.2021
(73) Proprietor: SOLiD Inc., Seongnam-si, Gyeonggi-do (KR)
(72) Inventor: KIM, Ok Jin, 13493 Gyeonggi-do (KR)
(74) Representative: Frenkel, Matthias Alexander

(56) References cited:
- Atis: "Neutral Host Solutions for 5G Multi-Operator Deployments in Managed Spaces", , 25 July 2019 (2019-07-25), pages 1-49, XP055857134, Retrieved from the Internet: URL:https://access.atis.org/apps/group_pub lic/download.php/48403/ATIS-I-0000073.pdf [retrieved on 2021-11-02]

## Description

### BACKGROUND

### 1. Field

One or more embodiments relate to a method of operating a distributed antenna system interworking with a spectrum sharing system.

### 2. Description of the Related Art

In order to cope with the increasing demand of mobile traffic and the limitation of frequency spectrum (or spectrum) retrieval and relocation, the introduction of radio station management and a service system based on spectrum sharing is being actively discussed in order to efficiently utilize limited radio resources (e.g., a bandwidth and transmission power) mainly in major advanced countries.

For example, the United States has announced the introduction of Citizens Broadband Radio Service (CBRS), which is an urban spectrum sharing service in the 3.5 GHz band. In addition, the United Kingdom has announced the introduction of spectrum co-use for the 3.8 GHz to 4.2 GHz bands based on the Framework for Spectrum Sharing.

Such a spectrum sharing service is expected not only to be applied in the existing specific service field but also to provide a sufficient advantage for substituting and converging various services as well as supplementing a mobile communication service such as 5G.

Meanwhile, a distributed antenna system (DAS) is a transmission medium such as optical fiber, wired Ethernet, and the like, or a system composed of spatially separated antenna nodes (e.g., a remote unit) connected to a common node (e.g., a head-end unit) through a transmission network.

The DAS is installed in an area where radio signals are not received or where radio signals are weak, such as inside buildings, underground buildings, subways, tunnels, apartment complexes in a residential area, stadiums, and the like to extend coverage of a base station by providing communication services to even a shadow area where signals of the base station are difficult to reach.

The DAS is closely related to a neutral host radio access network model proposed by the CBRS Alliance, and is likely to interwork with the spectrum sharing system or to be applied as a part of the spectrum sharing system.

However, a concrete method of interworking between the DAS and the spectrum sharing system has not been proposed yet.

In addition, because the DAS is designed to support a fixed range of frequencies and bandwidths according to the needs of service providers, etc. in general, so the DAS is not suitable to support the concept of variable radio resource management of the spectrum sharing system. The document ("Neutral Host Solutions for 5G Multi-Operator Deployments in Managed Spaces", 25 July 2019) discloses neutral host concept and an overview of technical solutions to support neutral host.

### SUMMARY

One or more embodiments include a method of operating a distributed antenna system effectively interworking with a spectrum sharing system.

The disclosure is not limited to the above objectives, but other objectives not described herein may be clearly understood by those of ordinary skilled in the art from descriptions below.

The invention is defined by the appended claims. According to an aspect of the disclosure, there is provided a method operating a distributed antenna system (DAS) interworking with a spectrum sharing system (SSS), the method includes: setting, by a node unit of the DAS, a radio resource to be used by each of a plurality of radio service devices (RSDs) communicatively connected to the node unit; requesting, by the node unit, available radio resource information from a system controller of the SSS based on a result of the setting; receiving, by the node unit, allocation information including a result of allocating shared radio resources of the SSS to the DAS from the system controller; and selectively activating, by the node unit, a service signal corresponding to the set radio resource of each of the plurality of RSDs according to the allocation information.

According to an embodiment, the setting of the radio resource includes, setting, by the node unit, at least one of a plurality of channels having different frequency bands as a radio resource to be used by each of the plurality of RSDs.

According to an embodiment, the requesting of the available radio resource information includes, generating, by the node unit, information about radio resources supported by the DAS based on the result of the setting; and requesting, by the node unit, the available radio resource information from the system controller based on the information about radio resources supported by the DAS.

According to an embodiment, the selectively activating includes, selectively activating, by the node unit, the service signal corresponding to the set radio resource of each of the plurality of RSDs by blocking or allowing reception of the service signal transmitted from each of the plurality of RSDs through the set radio resource according to the allocation information.

According to an embodiment, the selectively activating includes, selectively activating, by the node unit, the service signal corresponding to the set radio resource of each of the plurality of RSDs by blocking or allowing routing of the service signal transmitted from each of the plurality of RSDs to another node unit communicatively connected to the node unit through the set radio resource according to the allocation information.

According to an embodiment, the selectively activating includes, selectively activating, by the node unit, the service signal corresponding to the set radio resource of each of the plurality of RSDs by blocking or allowing each of the plurality of RSDs to transmit the service signal to the node unit through the set radio resource according to the allocation information.

According to an embodiment, the node unit is a head-end unit of the DAS communicatively connected to the at least one RSD.

According to an embodiment, the node unit is a remote unit of the DAS communicatively connected to the at least one RSD.

According to an embodiment, the node unit and the system controller are communicatively directly connected to each other.

According to an embodiment, the node unit and the system controller are communicatively connected to each other via a management system entity.

According to another aspect of the disclosure, there is provided a node unit of a distributed antenna system (DAS) interworking with a spectrum sharing system (SSS), the node unit adapted to perform one or more of the above operations.

### BRIEF DESCRIPTION OF THE DRAWINGS

These and/or other aspects will become apparent and more readily appreciated from the following description, taken in conjunction with the accompanying drawings in which:
FIG. 1 is a block diagram of a spectrum sharing system interworking with a distributed antenna system according to an embodiment;
FIGS. 2A to 2F are block diagrams of elements of a spectrum sharing system;
FIGS. 3A and 3B are views illustrating a method of operating a distributed antenna system; and
FIG. 4 is a flowchart illustrating a method of operating a distributed antenna system according to an embodiment.

### DETAILED DESCRIPTION

An example of a spectrum sharing system of the disclosure is a Citizens Broadband Radio Service (CBRS) system specified by the United States Federal Communications Commission (FCC). Hereinafter, for convenience of description, technologies proposed in the disclosure will be described on the premise of the CBRS system. However, such a description does not limit that the technologies proposed in the disclosure are applied to various spectrum sharing systems (e.g., Licensed Spectrum Access (LSA) system specified by Europe) other than the CBRS system.

The spectrum sharing system of the disclosure is a new type of system in which two or more wireless communication systems provide authorized shared access in conjunction with an in-building wireless communication system (e.g., a distributed antenna system (DAS)), which is further developed from a general CBRS system that provides or participates in authorized shared access between two or more wireless communication networks or two or more wireless communication systems (e.g., citizens broadband service devices (CBSDs) or CBSD domain proxies).

As the spectrum sharing system of the disclosure operates with the in-building wireless communication system, such as a distributed antenna system, as an element, it is required to protect radio resources from each other based on constraints due to radio access technologies being used by the in-building wireless communication system, as well as radio access technologies (RATs) being used by general competing users or wireless communication systems, and a plurality of operating modes for the RATs.

In a case of the DAS implemented with neutral host architecture, various radio services are integrated and provided to a user device within service coverage. This is because various problems such as interference may be caused when the radio resources are shared without considering interworking (or interoperating) of the DAS in the spectrum sharing system.

In order to meet these requirements and to allow for optimization of radio resource allocations, various aspects of the disclosure suggest technologies that allow system controllers of the spectrum sharing system to directly or indirectly recognize whether CBSDs (or CBSD domain proxies) interworks (or interoperates) with a DAS, and to optimize the allocation of radio resources to the CBSDs and the DAS based on a result of the recognition of interworking.

On the other hand, in order for the DAS to interwork with the spectrum sharing system, signal processing configurations that may adapt to changes in dynamic radio resources need to be provided. However, in the case of a typical DAS, signal processing configurations are designed in a limited frequency and bandwidth range according to the needs of a service provider, etc., a major change in the design is required for interworking with the spectrum sharing system.

Accordingly, various aspects of the disclosure may implement signal processing configurations with a simple structure without major changes in the design, and suggest techniques capable of performing channel activation and deactivation functions that cannot be implemented with a legacy DAS structure as well as easy interworking with a spectrum sharing system.

The technologies described in the disclosure and systems and devices for implementation thereof may utilize RATs such as WiFi or WiMax as well as RATs such as code division multiple access (CDMA), time division multiple access (TDMA), frequency division multiple access (FDMA), orthogonal FDMA (OFDMA), single-carrier FDMA (SC-FDMA), LTE, a global system for mobile communications (GSM), 5G NR, and the like to support shared access to the radio spectrum between networks (or systems).

Various features will be further described later below.

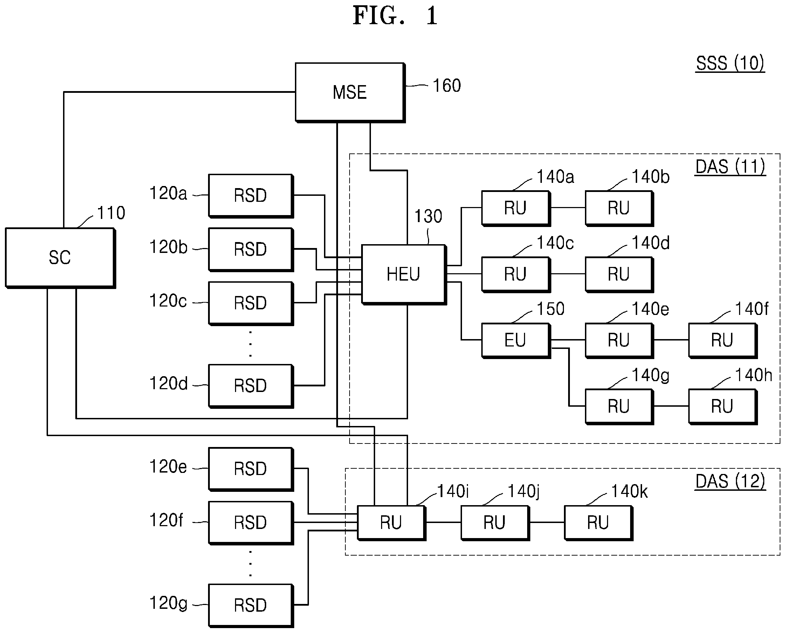

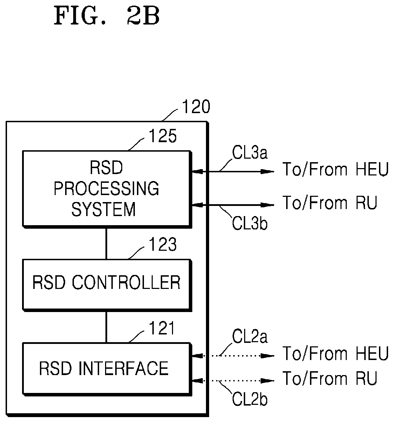

The claimed invention corresponds to fig. 1 and 2B and to the related text in the description, the other figures and the remaining text of the description are only intended to better explain the claimed invention.

FIG. 1 is a block diagram of a spectrum sharing system (SSS) 10 according to an embodiment.

The SSS 10 may include a system controller (SC) 110, radio service devices (RSDs) 120a to 120g, first and second distributed antenna systems (DAS) 11 and 12, and a management system entity (MSE) 160.

The SSS 10 provides some degree of protection to existing users (e.g., fixed satellite systems, WISPs, and government/military systems) with potentially higher priorities, other users, and radio service providers while allowing shared radio resources, for example, operating frequencies, power limits, a geographical area, or the like, to be dynamically allocated to multiple users and radio service providers related to the RSDs 120a to 120g and the first and second DAS 11 and 12 by control of the SC 110.

The SC 110, through node units (e.g., a head-end unit 130 and a remote unit 140i) of the first and second DAS 11 and 12 connected to the RSDs 120a to 120g or the MSE 160, may control overall spectrum sharing in the SSS 10 by accepting requests for use of the shared radio resources from the first and second DAS 11 and 12, by solving conflicts or over-constraints in these requests, and by approving the use of the shared radio resources for radio access services.

For example, the SC 110, during registration, resource requests, or periodic status updates in the process of operations for allocation and reallocation of the shared radio resources, may receive information related to an interworking state between the first and second DAS 11 and 12 and corresponding RSDs, radio resource related information supported by the first and second DAS 11 and 12 through interworking, or the like from the node unit of the first and second DAS 11 and 12 or the MSE 160.

The SC 110 may determine whether the first and second DAS 11 and 12 interwork with the RSDs 120a to 120g, respectively, based on the received information, and may allocate the shared radio resources in consideration of a result of the determination.

In more detail, the SC 110 checks an interworking state of the first and second DAS 11 and 12 and the RSDs 120a to 120g. The SC 110 recognizes the spectrum usage amount of priority users in a specific geographical location and/or a specific time set in which the first DAS 11 and the RSDs 120a to 120d, and the second DAS 12 and the RSDs 120e to 120g interworking with each other are respectively arranged. Thereafter, the SC 110 may allocate available shared radio resources in consideration of geographic locations, operating states, frequency information, etc. of the first DAS 11 and the RSDs 120a to 120d, and the second DAS 12 and the RSDs 120e to 120g that are interworking with each other.

However, according to an embodiment, the SC 110 may allocate radio resources such that the shared radio resources respectively allocated to the first and second DAS 11 and 12 include shared radio resources allocated to corresponding RSDs from among the RSDs 120a to 120g. This is because the first and second DAS 11 and 12 combine/distribute radio resources of the corresponding RSDs, respectively.

The term "interworking" means that the RSDs 120a to 120g are used as signal sources of at least one of the first and second DAS 11 and 12.

In addition, the term "determining" encompasses a wide variety of actions. For example, the term "determining" may include computing, processing, deriving, examining, looking up (e.g., looking up in a table, database, or other data structure), identifying, and the like. The term "determining" may also include receiving (e.g., receiving information), accessing (accessing data in a memory), and the like. The term "determining" may also include resolving, selecting, choosing, establishing, and the like.

The RSDs 120a to 120g may be devices that provide radio services using any radio access technology, such as a base station, an access point, or any type of radio frequency (RF) access system.

The RSDs 120a to 120g may be communicatively connected to a node unit of any one of the first and second DAS 11 and 12. In other words, the RSDs 120a to 120g may not be directly connected to the SC 110, but may be communicatively connected to the SC 110 through a node unit of any one of the first and second DAS or through the MSE 160. As the RSDs 120a to 120g are not directly connected to the SC 110 but indirectly connected to the SC 110, when the number of RSDs constituting the SSS 10 increases, it is possible to effectively reduce the burden of managing, controlling, and operating the RSDs of the SC 110. According to an example not falling within the scope of the claimed invention, the RSDs 120a to 120g may be communicatively connected to the MSE 160. Hereinafter, for convenience of explanation, an embodiment in which the RSDs 120a to 120g are connected to a node unit of any one of the first and second DAS 11 and 12 will be mainly described.

By using a radio resource (a frequency spectrum or channel) set by the control of a corresponding DAS of the first and second DAS 11 and 12, the RSDs 120a to 120g may provide a service signal to the corresponding DAS.

In addition, although not shown in FIG. 1, some of the RSDs 120a to 120g may be connected to other RSDs, and thus may each function as a domain proxy for lower RSDs.

The first and second DAS 11 and 12 may respectively set use radio resources of corresponding RSDs from among the RSDs 120a to 120g, may selectively activate/deactivate radio service signals provided from the corresponding RSDs in consideration of an allocation result of shared radio resources of the SC 110, and may combine/distribute the activated radio service signals and provide them to end user devices within coverage, respectively.

According to an example not falling within the scope of the claimed invention, the first DAS 11 may include a head-end unit (HEU) 130 connected to the SC 110, the RSDs 120a to 120d, and/or the MSE 160, remote units (RU) 140a and 140c connected to the HEU 130 in a point-to-multipoint structure, and RUs 140b and 140d respectively connected to corresponding RUs of the RUs 140a and 140c in a daisy chain structure.

As shown in FIG. 1, the first DAS 11 may further selectively include an expansion unit (EU) 150, and RUs 140e to 140h may be connected to the EU 150 in a mixed form of the point-to-multipoint structure and the daisy-chain structure.

The first DAS 11 sets radio resources of the connected RSDs 120a to 120d, and may transmit information about available radio resources through the connected RSDs 120a to 120d (channels, a frequency spectrum range, types and operating parameters of radio access technologies, a geographic location, etc.), interworking information with the connected RSDs 120a to 120d, and the like to the SC 110 directly or through the MSE 160. The information is transmitted to the SC 110 through an operation of requesting available radio resource information for the SC 110 of the first DAS 11.

The first DAS 11 may receive the allocation result of the shared radio resources in response to the request for the available radio resource information from the SC 110, may selectively activate/deactivate radio service signals from the RSDs 120a to 120d according to the allocated radio resource, and may provide the activated radio service signals to end user devices.

According to an example not falling within the scope of the claimed invention, the second DAS 12 may include an RU 140i connected to the SC 110, the RSDs 120e to 120g, and the MSE 160, and RUs 140j and 140k connected to the RU 140i in a daisy chain structure.

The RUs 140i, 140j, and 140k may process a plurality of radio services in an integrated manner, unlike a remote radio head, which is an RF processing device of a distributed base station. FIG. 1 shows only an example not falling within the scope of the claimed inventionin which the RUs 140i, 140j, and 140k are directly connected to the RSDs 120d and 120e, but the RUs 140i, 140j, and 140k may also be connected to the RSDs 120d and 120e through a certain network.

The second DAS 12 may set radio resources of the connected RSDs 120e to 120g, and may transmit information about available radio resources through the connected RSDs 120e to 120g (channels, a frequency spectrum range, types and operating parameters of radio access technologies, a geographic location, etc.), interworking information with the connected RSDs 120e to 120g, and the like to the SC 110 directly or through the MSE 160. The information may be transmitted to the SC 110 through an operation of requesting available radio resource information for the SC 110 of the second DAS 12.

The second DAS 12 may receive the allocation result of the shared radio resources in response to the request for the available radio resource information from the SC 110, may selectively activate/deactivate radio service signals from the RSDs 120e to 120g according to the allocated radio resource, and may provide the activated radio service signals to end user devices.

The MSE 160 may be communicatively connected to the SC 110 and node units (e.g., the HEU 130 and the RU 140i) of the first and second DAS 11 and 12.

The MSE 160 may monitor, manage, control, and operate all operating states of the first and second DAS 11 and 12.

The MSE 160 may be a network management system or a DAS management system provided by a manufacturer of the first and second DAS 11 and 12.

According to an example not falling within the scope of the claimed invention, the MSE 160, because of interworking with corresponding RSDs, may receive information about radio resources that may be provided by the first and second DAS 11 and 12 from the node units of the first and second DAS 11 and 12.

The MSE 160 may transmit the received information to the SC 110, or based on the received information, may generate interworking information indicating an interworking state of the first and second DAS 11 and 12 and corresponding RSDs, or virtualized RSD information that allows the first and second DAS 11 and 12 and corresponding RSDs to be recognized as an integrated radio service device, and may transmit the generated information to the SC 110.

The MSE 160 receives allocation information including a result of allocation of shared radio resources from the SC 110, and may transmit the received allocation information to the node units of the first and second DAS 11 and 12.

On the other hand, according to the disclosure, elements of the SSS 10, that is, the node units (HEU, RU, and EU) constituting the SC, RSD, and DAS, the number of MSEs, and a topology for connecting them are not limited to the embodiment shown in FIG. 1, and various modifications and variations are possible.

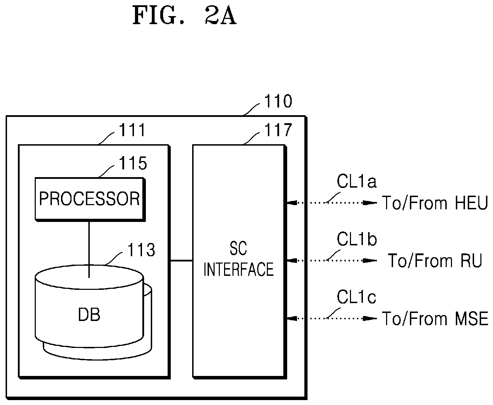

FIGS. 2A to 2F are block diagrams of elements of a spectrum sharing system. In the description of FIGS. 2A to 2F, the same or corresponding reference numerals as those in FIG. 1 denote the same or corresponding elements, and therefore, repeated descriptions thereof will not be given herein.

Referring to FIGS. 1 and 2A, the SC 110 may include a system controller processing system 111 (hereinafter referred to as an SC processing system) and a system controller interface 117 (hereinafter referred to as an SC interface).

The SC processing system 111 may control all operations of the SSS 10. For example, the SC processing system 111 may control processing operations for a registration request of a DAS communicatively connected to the SC processing system 111 through the MSE 160, processing operations for a radio resource/authorization request, status update processing operations thereof, and the like.

In particular, the SC processing system 111, as part of the above-described operations or as a separate operation, may check whether the DAS interworks with RSDs to reflect an interworking operation state when shared radio resources are allocated.

The SC processing system 111 may include at least one database 113 and a processor 115.

The at least one database 113 may store rules necessary for management and operation of the SSS 10, various information about users, for example, information about priorities (e.g., a top-level incumbent user, a priority access authorized user, and a general access authorized user), geographical location and/or time information, coverage, an maximum allowable power output level, a modulation type, interference threshold information, and so on.

The processor 115 may determine whether the DAS interworks with the RSDs based on an available radio resource request, interworking information, and the like of the DAS (in more detail, node units of the DAS such as HEU, RU, and EU).

The processor 115 may be connected to the database 113 and recognize a spectrum usage state, a usage amount, and the like of users having priority at specific times and/or in geographical locations related to the DAS and the RSDs that are determined whether to interwork with each other.

The processor 115 may allocate available radio resources to the DAS and the RSDs based on a result of the recognition.

The processor 115 may transmit allocation information indicating a result of the allocation of the radio resources to the DAS directly or through the MSE 160 to control the use of shared radio resources by the DAS and the RSDs.

The SC processing system 111 may be communicatively connected to the HEU 130 through a first communication link CL1a, may be communicatively connected to an RU 140 through a first communication link CL1b, and may be communicatively connected to the MSE 160 through a first communication link CL1c.

The SC processing system 111 may transmit and receive information for spectrum sharing access control to and from the HEU 130, the RU 140, and the MSE 160 through the SC interface 117.

The SC processing system 111 may transmit and receive the information to and from the HEU 130, the RU 140, and the MSE 160 through the SC interface 117 by using a security protocol such as a HyperText Transfer Protocol over Secure Socket Layer (HTTPS) protocol.

The first communication links CL1a, CL1b, and CL1c may be, for example, but are not limited to, the Internet, and may be any wired and/or wireless communication link such as WiMax, network optical fiber, an Ethernet-based cable, and the like.

Referring to FIGS. 1 and 2B, an RSD 120 may include a radio service device interface 121 (hereinafter referred to as an RSD interface), a radio service device controller 123 (hereinafter referred to as an RSD controller), and a radio service device processing system 125 (hereinafter referred to as an RSD processing system).

The RSD interface 121 is for the RSD 120 to transmit and receive pieces of information necessary for spectrum sharing access to and from the HEU 130 and an RU 140.

The RSD 120 may transmit and receive the pieces of information to and from the HEU 130 and the RU 140 connected to the RSD 120 through second communication links CL2a and CL2b, respectively, by using the RSD interface 121.

The second communication links CL2a and CL2b may be, for example, but are not limited to, the Internet, and may be any wired and/or wireless communication link such as WiMax, network optical fiber, an Ethernet-based cable, and the like.

The RSD controller 123 may generate information related to a radio service or the like provided by the RSD 120, and may transmit the information to the HEU 130 or the RU 140 through the RSD interface 121.

The RSD controller 123 may control the RSD processing system 125 according to radio resource setting information transmitted from the HEU 130 and the RU 140 through the RSD interface 121, allocation information of shared radio resources, etc.

The RSD processing system 125 may generate a service signal of a radio access technology that the RSD 120 may support by using a radio resource (e.g., a frequency spectrum or channel) allocated by the control of the RSD controller 123. In addition, according to an example not falling within the scope of the claimed invention, when the radio resource set by the control of the RSD controller 123 corresponds to allocated radio resources, the RSD processing system 125 may selectively activate a related service signal or allow to transmit the related service signal to a corresponding DAS.

The RSD processing system 125 may transmit the generated service signals to the HEU 130 and the RU 140 through third communication links CL3a and CL3b.

The third communication links CL3a and CL3b are media for transmitting analog or digital type service signals, for example, an RF cable, an optical fiber, an Ethernet-based cable, and the like. Although not shown in FIG. 2B, the RSD processing system 125 may include converters for converting service signals generated to correspond to the third communication links CL3a and CL3b.

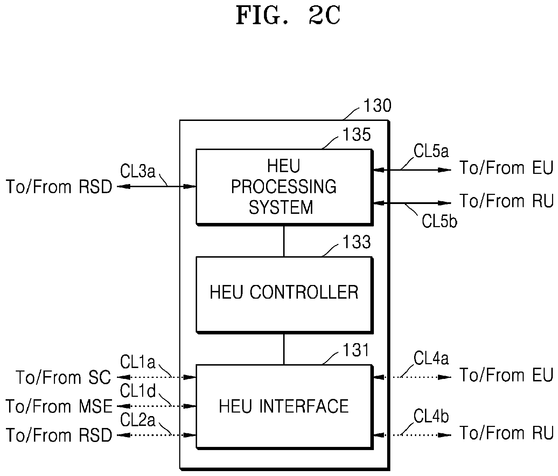

Referring to FIGS. 1 and 2C, the HEU 130 may include a head-end unit interface 131 (hereinafter referred to as an HEU interface), a head-end unit controller 133 (hereinafter referred to as an HEU controller), and a head-end unit processing system 135 (hereinafter referred to as an HEU processing system).

The HEU interface 131 is for the HEU 130 to transmit and receive information necessary for spectrum sharing access to and from the SC 110, the RSD 120, the RU 140, the EU 150, and the MSE 160.

The HEU 130 may transmit the above-described information to the RSD 120 by using a certain security protocol, for example, a HTTPS protocol.

The HEU 130 may transmit and receive pieces of information such as allocation information to and from the RU 140, the EU 150, and the MSE 160 by using the above-described security protocol or another security protocol defined by a manufacturer of the DAS.

The HEU 130 may transmit and receive the pieces of information to and from the SC 110 and the MSE 160 connected to the HEU 130 through first communication links CL1a and CL1d, respectively, the RSD 120 connected to the HEU 130 through the second communication link CL2a, and the EU 150 and the RU 140 connected to the HEU 130 through fourth communication links CL4a and CL4b, respectively, by using the HEU interface 131.

The fourth communication links CL4a and CL4b may be, for example, but are not limited to, the Internet, and may include any wired and/or wireless communication link such as WiMax, network optical fiber, an Ethernet-based cable, and the like.

The HEU controller 133 sets a use radio resource of the RSD 120. Accordingly, a radio resource of the RSD 120 may be fixed.

The HEU controller 133 may generate information about supportable radio resources according to interworking with the RSD 120, interworking information indicating whether interworking or not, and the like, and may transmit the information to the SC 110 or the MSE 160 through the HEU interface 131. The transmission of the information is performed as an operation of the HEU controller 133 requesting available radio resource information from the SC 110, or as part of the operation.

The HEU controller 133 may receive allocation information transmitted from the SC 110 or the MSE 160 through the HEU interface 131. The HEU controller 133 may selectively activate or deactivate a service signal transmitted from the RSD 120 by controlling the HEU processing system 135 according to the received allocation information. The received allocation information may be transmitted to the RU 140 and the EU 150 through the HEU interface 131.

For example, when a set radio resource of the RSD 120 is included in the allocation information (when the set radio resource matches the available radio resource allocated to the DAS), the HEU processing system 135 may allow receiving service signals of radio access technology transmitted from the RSD 120 through the third communication link CL3a under the control of the HEU controller 133. As a result, the received service signals may be activated.

For another example, when a set radio resource of the RSD 120 is not included in the allocation information (when the set radio resource does not match the available radio resource allocated to the DAS), the HEU processing system 135 may block reception of service signals transmitted from the RSD 120 under the control of the HEU controller 133. As a result, service signals corresponding to the set radio resource of the RSD 120 may be deactivated.

Alternatively, when a set radio resource of the RSD 120 is not included in the allocation information, the HEU processing system 135 may selectively block (or filter) service signals transmitted from the RSD 120 in a process of combining with other activated service signals under the control of the HEU controller 133. As a result, service signals corresponding to the set radio resource of the RSD 120 may be deactivated.

On the other hand, when a set radio resource of the RSD 120 is not included in the allocation information, the HEU processing system 135 may block transmission of service signals corresponding to the set radio resource from the RSD 120, that is, output itself, under the control of the HEU controller 133. As a result, service signals corresponding to the set radio resource of the RSD 120 may be deactivated.

The HEU processing system 135 may perform processes such as noise cancellation, filtering, combining, and the like, in an analog way and/or digitally using radio resources allocated to the activated service signals, and may transmit the combined service signals to the RU 140 and the EU 150 through fifth communication links CL5a and CL5b.

The fifth communication links CL5a and CL5b may be media for transmitting analog or digital type service signals, for example, an RF cable, an optical fiber, an Ethernet-based cable, and the like. Although not shown in FIG. 2C, the HEU processing system 135 may include converters for converting service signals combined to correspond to the fifth communication links CL5a and CL5b, and transceivers.

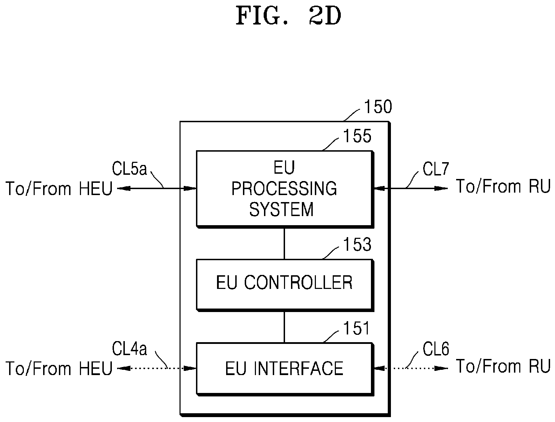

Referring to FIGS. 1 and 2D, the EU 150 may include an expansion unit interface 151 (hereinafter referred to as an EU interface), an expansion unit controller 153 (hereinafter referred to as an EU controller), and an expansion unit processing system 155 (hereinafter referred to as an EU processing system).

The EU interface 151 is for transmitting and receiving information necessary for spectrum sharing access to and from the HEU 130 and the RU 140.

The EU 150 may transmit and receive the necessary information to and from the HEU 130 and the RU 140 by using a security protocol such as an HTTPS protocol or other security protocols defined by a manufacturer of the DAS.

The EU 150 may transmit and receive the necessary pieces of information to and from the HEU 130 connected to the EU 150 through the fourth communication link CL4a and the RU 140 connected to the EU 150 through a sixth communication link CL6 by using the EU interface 151.

The sixth communication link CL6 may be, for example, but is not limited to, the Internet, and may include any wired and/or wireless communication link such as WiMax, network optical fiber, an Ethernet-based cable, and the like.

The EU controller 153 may control the EU processing system 155 according to allocation information of radio resources transmitted from the HEU 130 through the EU interface 151.

The EU processing system 155 may receive combined service signals from the HEU 130 through the fifth communication link CL5a and perform processes such as amplification and the like on the combined service signals in an analog way and/or digitally by using allocated radio resources. Thereafter, the EU processing system 155 may transmit the processed service signals to the RU 140 through a seventh communication link CL7.

The seventh communication link CL7 may be a medium for transmitting analog or digital type service signals, for example, an RF cable, an optical fiber, an Ethernet-based cable, and the like. Although not shown in FIG. 2D, the EU processing system 155 may include a converter for converting the signal received through the fifth communication link CL5a into a signal suitable for processing therein, and transceivers, and may include converters for converting the processed signal to correspond to the seventh communication link CL7, and transceivers.

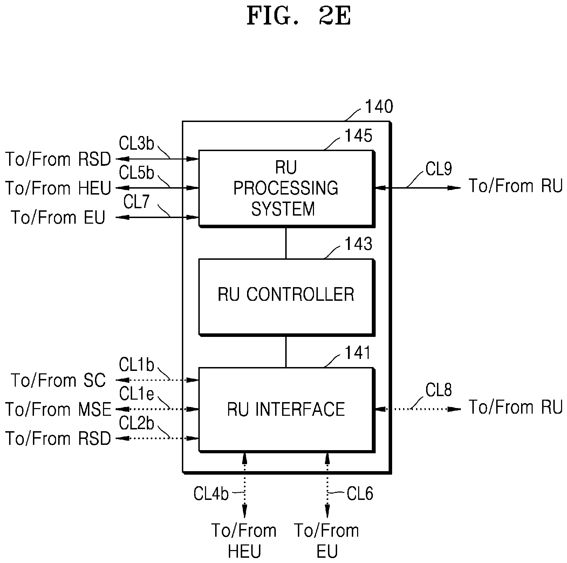

Referring to FIGS. 1 and 2E, the RU 140 may include a remote unit interface 141 (hereinafter referred to as an RU interface), a remote unit controller 143 (hereinafter referred to as an RU controller), and a remote unit processing system 145 (hereinafter referred to as an RU processing system).

The RU interface 141 is for transmitting and receiving information necessary for spectrum sharing access to and from the SC 110, the RSD 120, the HEU 130, the EU 150, the MSE 160, and other RUs.

The RU 140, according to an example not falling within the scope of the claimed invention, may transmit and receive the information to and from the SC 110 and the RSD 120 by using a security protocol such as an HTTPS protocol and may also transmit and receive the information to and from the HEU 130, the EU 150, and the MSE 160 by using other security protocols besides the HTTPS protocol.

The RU 140 may be connected to the SC 110 and the MSE 160 through first communication links CL1b and CL1e, respectively, may be connected to the RSD 120, the HEU 130, the EU 150, and other RUs through the second communication link CL2b, the fourth communication link CL4b, the sixth communication link CL6, and an eighth communication link CL8, respectively, and may transmit and receive the information using the RU interface 141.

The eighth communication link CL8 may be, for example, but is not limited to, the Internet, and may include any wired and/or wireless communication link such as WiMax, network optical fiber, an Ethernet-based cable, and the like.

The RU controller 143 may control the RU processing system 145 according to allocation information of radio resources transmitted from the SC 110, the HEU 130, the EU 150, and the MSE 160 through the RU interface 141.

The RU processing system 145 may receive a service signal from the RSD 120 through the third communication link CL3b, combined service signals from the HEU 130 through the fifth communication link CL5b, or amplified service signals from the EU 150 through the seventh communication link CL7.

The RU processing system 145 may perform processes such as filtering, amplification, and the like for the received service signals in an analog way and/or digitally using radio resources allocated by the control of the RU controller 143, and may transmit the processed service signals to an end-user device or another RU through a ninth communication link CL9.

The ninth communication link CL9 may be a medium for transmitting analog or digital type service signals, for example, an RF cable, an optical fiber, an Ethernet-based cable, and the like. Although not shown in FIG. 2E, the RU processing system 145 may include a converter for converting the service signals received through the third communication link CL3b, the fifth communication link CL5b, and the seventh communication link CL7 into signals suitable for processing therein, a converter for converting amplified signals to correspond to the ninth communication link CL9, and a transceiver for transmitting converted signals.

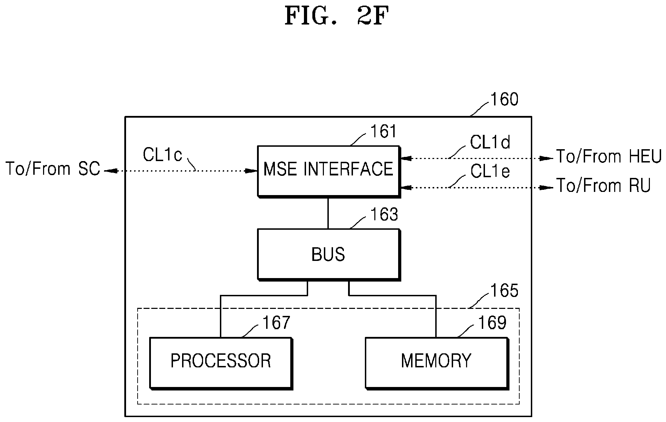

Referring to FIGS. 1 and 2F, the MSE 160 may include a management system entity interface 161 (hereinafter referred to as an MSE interface), a bus 163, and a management system entity processing system 165 (hereinafter referred to as an MSE processing system).

The MSE interface 161 is for the MSE 160 to transmit and receive pieces of information necessary for spectrum sharing access to and from the SC 110, the HEU 130, and the RU 140.

The MSE 160 may transmit and receive the pieces of information to and from the SC 110, the HEU 130, and the RU 140 connected to the MSE 160 through the first communication links CL1c, CL1d, and CL1e, respectively, by using the MSE interface 161.

As described above, the first communication links CL1c, CL1d, and CL1e may be, for example, but are not limited to, the Internet, and may be any wired and/or wireless communication link such as WiMax, network optical fiber, an Ethernet-based cable, and the like.

The bus 163 may communicatively connect the MSE interface 161 to the MSE processing system 165.

The MSE processing system 165 may include a processor 167 and a memory 169.

The processor 167 may be any device suitable for executing a program instruction for processing information about radio resources that are received (or pre-stored) or supported by the DAS through the MSE interface 161, interworking information, and the like.

Alternatively, the processor 167, based on identification information of the DAS received (or pre-stored) through the MSE interface 161 or information about radio access technology, may be any device suitable for executing program instructions for generating information about radio resources supported by the DAS, interworking information indicating an interworking status of RSDs and the DAS, or the like.

On the other hand, the processor 167 may be any device suitable for executing program instructions for monitoring, managing, controlling, and operating all operating states of the DAS.

The memory 169 may be any non-transitory medium for storing the program instructions described above that define an operation of MSE 160. For example, the memory 169 may be ROM, RAM, an optical storage, a magnetic storage, a flash memory, or any other medium.

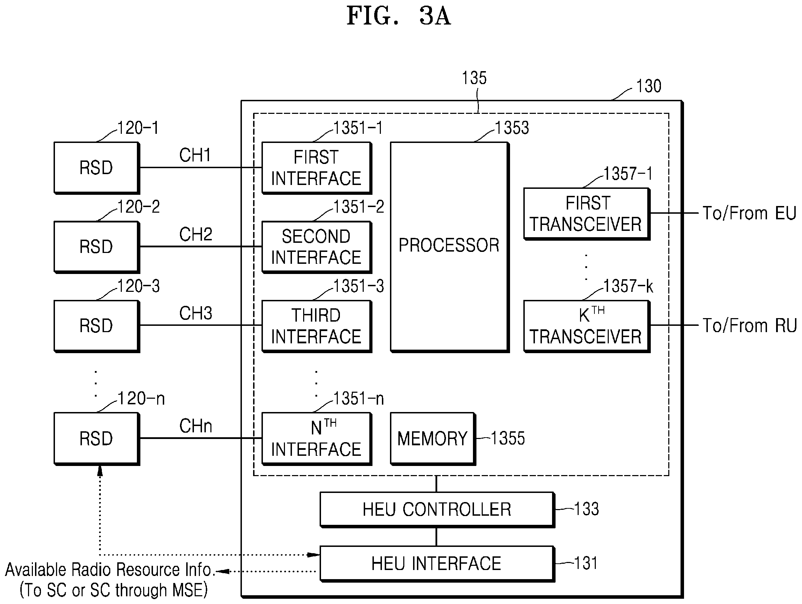

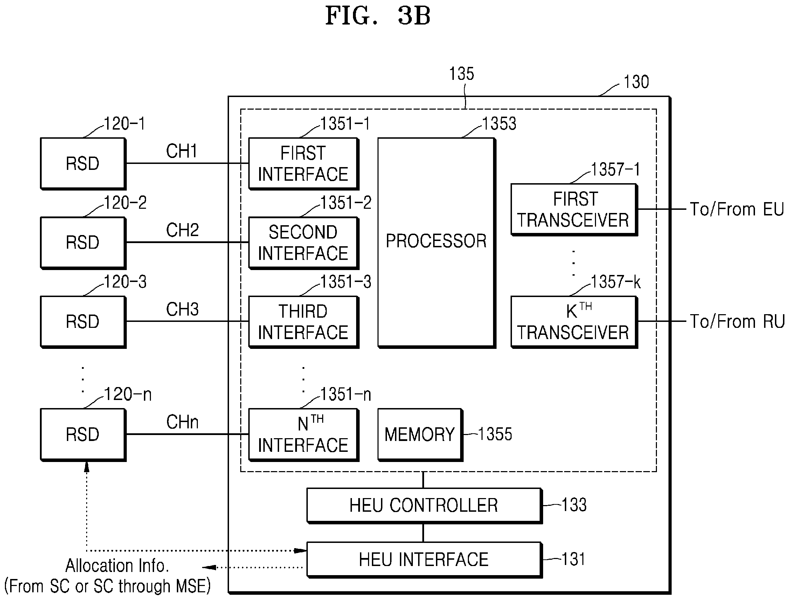

FIGS. 3A and 3B are views illustrating a method of operating a distributed antenna system.

FIGS. 3A and 3B are views for explaining a method of operating a DAS included in a spectrum sharing system centered on first to n^{th} RSDs 120-1 to 120-n (n is a natural number of 2 or more) and the HEU 130, and are views illustrating in more detail some components of the HEU 130 interworking with the first to n^{th} RSDs 120-1 to 120-n for each operation state.

FIGS. 3A and 3B show states in which the DAS operates as a virtualized radio service device by selectively activating/deactivating shared radio resources of the spectrum sharing system by the HEU 130 under the control of the SC 110 connected to the HEU 130 directly or via the MSE 160.

In the description of FIGS. 3A and 3B, the same or corresponding reference numerals as those in FIGS. 1 to 2F denote the same or corresponding elements, and therefore, repeated descriptions thereof will not be given herein. In addition, in the description of FIGS. 3A and 3B, operations related to service signal processing in a downlink direction will be mainly described, but a detailed description of a process in which activated service signals are provided from the HEU 130 to an end user device through an EU and an RU, or a process of processing radio service signals provided from the end user device in an uplink direction will not be given herein for convenience.

First, referring to FIG. 3A, the HEU 130 includes the HEU interface 131, the HEU controller 133, and the HEU processing system 135 as described with reference to FIG. 2C.

In addition, the HEU processing system 135 includes first to n^{th} interfaces 1351-1 to 1351-n, a processor 1353, a memory 1355, and first to k^{th} transceivers 1357-1 to 1357-k (k is a natural number greater than or equal to 2).

The first to n^{th} interfaces 1351-1 to 1351-n may be communicatively connected to corresponding RSDs from among the first to n^{th} RSDs 120-1 to 120-n.

The first to n^{th} interfaces may receive analog-type service signals CH1 to CHn (hereinafter referred to as channel signals) corresponding to set radio resources from the first to n^{th} RSDs 120-1 to 120-n, and may digitize the received channel signals CH1 to CHn.

The first to n^{th} interfaces 1351-1 to 1351-n may transmit data streams generated because of digitization of the channel signals CH1 to CHn to the processor 1353.

According to an example not falling within the scope of the claimed invention, when the first to n^{th} interfaces 1351-1 to 1351-n receive digitized channel signals from the first to n^{th} RSDs 120-1 to 120-n, the first to n^{th} interfaces 1351-1 to 1351-n may transmit data streams to the processor 1353 after performing processing such as resampling on the digitized channel signals.

The processor 1353 may frame the data streams to generate a downlink transmission frame, and may distribute the downlink transmission frame to the first to k^{th} transceivers 1357-1 to 1357-k to route the downlink transmission frame to the EU and the RU.

Each of the first to k^{th} transceivers 1357-1 to 1357-k may convert the downlink transmission frame into a format suitable for a transmission medium between the HEU 130 and the EU and the RU, and may transmit the downlink transmission frame to the EU and the RU.

The HEU controller 133 may transmit radio resource configuration information to each of the first to n^{th} RSDs 120-1 to 120-n through the HEU interface 131. The first to n^{th} RSDs 120-1 to 120-n may set their own radio resources in response to the radio resource setting information.

For example, the HEU controller 133 may set the first to n^{th} RSDs 120-1 to 120-n to service at least one radio resource (channel) of different frequency bands, respectively.

The HEU controller 133 may generate information about radio resources supported by the DAS, that is, the HEU 130, the RU, and the EU, based on a result of the radio resource setting for the first to n^{th} RSDs 120-1 to 120-n.

The HEU controller 133 may request available radio resource information of the DAS from the SC 110 (see FIGS. 1 and 2F) directly or via the MSE 160 (see FIGS. 1 and 2F), based on the information about radio resources supported by the DAS.

The SC 110, in response to the request, may allocate shared radio resources of a spectrum sharing system to the DAS in consideration of an interworking state of the first to n^{th} RSDs 120-1 to 120-n and the HEU 130, and may transmit allocation information including a result of the allocation to the HEU controller 133 directly or via the MSE 160.

The HEU controller 133 may selectively activate/deactivate the radio resources supported by the DAS in the spectrum sharing system according to the received allocation information.

An operation state when radio resources that the DAS cannot support according to allocation information are the second channel signal CH2 and the n^{th} channel signal CHn will be described with further reference to FIG. 3B.

When the second and n^{th} channel signals CH2 and CHn are radio resources that the DAS cannot support, the HEU controller 133 may deactivate the second and n^{th} channel signals CH2 and CHn.

For example, the HEU controller 133 may control the second and n^{th} interfaces 1351-2 and 1351-n to block reception of the second and n^{th} channel signals CH2 and CHn transmitted from the second and n^{th} RSDs 120-2 and 120-n.

For another example, the HEU controller 133 may control the processor 1353 to filter (or block) the second and n^{th} channel signals CH2 and CHn digitized through the second and n^{th} interfaces 1351-2 and 1351-n in a process of generating a downlink frame through combining/framing with other digitized channel signals so that the second and n^{th} channel signals CH2 and CHn may not be transmitted to the RU and ultimately not transmitted to end user devices.

For another example, the HEU controller 133 may block transmission, that is, output, of the second and n^{th} channel signals of the second and n^{th} RSDs 120-2 and 120-n.

As such, by selectively deactivating radio resources not allocated to the DAS in the HEU 130, the DAS may service only allocated radio resources. In addition, as the DAS interworks with a spectrum sharing system, it is possible to effectively prevent unexpected interference from occurring in a specific area and/or at a specific time.

As such, by operating the DAS as one virtualized radio service device capable of performing selective activation/deactivation processing of shared radio resources through the above-described processing of the HEU 130, units of the DAS may be simply implemented with legacy structures for processing a limited range of frequencies and bandwidths without significant changes in design, respectively, and may interwork with the spectrum sharing system without limitation.

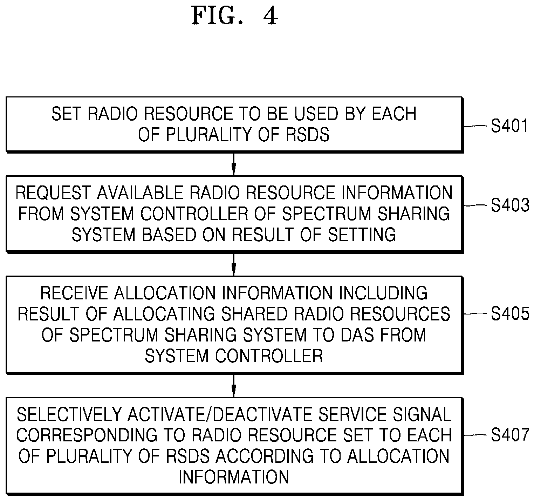

FIG. 4 is a flowchart illustrating a method of operating a distributed antenna system according to an embodiment.

FIG. 4 is a flowchart for explaining operation processes centered on the HEU 130 described with reference to FIGS. 3A and 3B. FIG. 4 is described with reference to FIGS. 3A and 3B and repeated descriptions thereof are omitted for convenience of description.

In operation S401, the HEU 130 sets a radio resource to be used by each of the plurality of RSDs 120-1 to 120-n.

The HEU 130 may set at least one channel from among a plurality of channels having different frequency bands as a radio resource to be used by each of the plurality of RSDs 120-1 to 120-n, and accordingly, the radio resources of the plurality of RSDs 120-1 to 120-n are fixed.

In operation S403, the HEU 130 requests radio resources available to a DAS including the HEU 130, that is, available radio resource information, from a system controller of a spectrum sharing system based on a result of the setting.

The HEU 130 may request the available radio resource information from the system controller based on information such as a channel range, the number of channels, and a geographic location of the DAS that the DAS may provide, based on the result of the setting. The system controller allocates shared radio resources to the DAS in response to the available radio resource information request.

In operation S405, the HEU 130 receives allocation information including a result of allocating the shared radio resources to the DAS from the system controller.

In operation S407, the HEU 130 selectively activates/deactivates a service signal corresponding to the radio resource set to each of the plurality of RSDs 120-1 to 120-n according to the allocation information.

The HEU 130 may selectively activate/deactivate the service signals to conform to the shared radio resources allocated to the DAS by allowing/blocking reception of service signals respectively transmitted from the plurality of RSDs 120-1 to 120-n in which use radio resources are fixed, by allowing/blocking routing from the HEU 130 to an RU and an EU, or by allowing/blocking any transmission from the plurality of RSDs 120-1 to 120-n.

FIGS. 3A and 3B and 4 describe the embodiment in which the HEU 130 interworks with a plurality of RSDs above. However, even in an embodiment in which the RU 140 interworks with a plurality of RSDs, the allocation operation of the shared radio resources as shown in FIGS. 3A and 3B and 4 will be possible.

Further, the methods described with reference FIG. 4 include one or more operations and/or actions for achieving the methods. The operations and/or actions may be interchanged with one another without departing from the scope of the claims. In other words, the order and/or use of specific operations and/or actions may be modified without departing from the scope of the claims, unless a certain order for the operations and/or actions is specified.

In addition, various operations of the methods described above may be performed by any suitable means capable of performing corresponding functions. The means includes, but is not limited to, various hardware and/or software components and/or modules such as an application specific integrated circuit (ASIC) or a processor. In general, when there are operations corresponding to the drawings, these operations may have a corresponding counterpart and functional components having the same number as the number of the counterpart.

The various illustrative logic blocks, modules, circuits, and processors described in connection with the disclosure may be implemented or performed by a general-purpose processor designed to perform the functions disclosed herein, a digital signal processor (DSP), an ASIC, a field-programmable gate array (FPGA) or other programmable logic device (PLD), a discrete gate or transistor logic device, discrete hardware components, or any combination thereof. The general-purpose processor may be a microprocessor, but may alternatively be any commercially available processor, controller, microcontroller, or state machine. The processor may also be implemented in a combination of computing devices, for example, a combination of the DSP and the microprocessor, a plurality of microprocessors, one or more microprocessors in connection with a DSP core, or any other configuration.

According to embodiments of the disclosure, a distributed antenna system may fix a radio resource (channel) of each of a plurality of radio service devices that are signal sources, and may selectively allow or block shared radio resources from the plurality of radio service devices to be or from being serviced through the distributed antenna system under the control of a system controller of a spectrum sharing system.

As such, by operating the distributed antenna system as a virtualized radio service device capable of performing selective activation/deactivation of a radio resource, the distributed antenna system may be simply implemented with legacy structures for processing a limited range of frequencies and bandwidths without significant changes in design, and may interwork with the spectrum sharing system without limitation.

In addition, when the spectrum sharing system interworks with the distributed antenna system, the system controller may allocate and operate shared radio resources efficiently, considering whether to efficiently interwork with the distributed antenna system, while minimizing a management and control burden, and may effectively prevent unexpected interference from occurring in a specific area and/or at a specific time due to interworking of the distributed antenna system.

Effects obtainable by the disclosure are not limited to the effects described above, but other effects not described herein may be clearly understood by one of ordinary skill in the art from the above descriptions.

## Claims

1. A method operating a distributed antenna system, DAS (11, 12), interworking with a spectrum sharing system, SSS (10), the method **characterized in**:
setting, by a node unit (130, 140, 150) of the DAS (11, 12), a radio resource to be used by each of a plurality of radio service devices, RSDs (120), communicatively connected to the node unit (130, 140, 150);
requesting, by the node unit (130, 140, 150), available radio resource information from a system controller (110) of the SSS (10) based on a result of the setting;
receiving, by the node unit (130, 140, 150), allocation information including a result of allocating shared radio resources of the SSS (10) to the DAS (11, 12) from the system controller (110); and
selectively activating, by the node unit (130, 140, 150), a service signal corresponding to the set radio resource of each of the plurality of RSDs (120) according to the allocation information.

2. The method of claim 1, wherein the setting of the radio resource comprises:
setting, by the node unit (130, 140, 150), at least one of a plurality of channels having different frequency bands as a radio resource to be used by each of the plurality of RSDs (120).

3. The method of claim 1 or 2, wherein the requesting of the available radio resource information comprises:
generating, by the node unit (130, 140, 150), information about radio resources supported by the DAS (11, 12) based on the result of the setting; and
requesting, by the node unit (130, 140, 150), the available radio resource information from the system controller (110) based on the information about radio resources supported by the DAS (11, 12).

4. The method of any one of claims 1 to 3, wherein the selectively activating comprises:
selectively activating, by the node unit (130, 140, 150), the service signal corresponding to the set radio resource of each of the plurality of RSDs (120) by blocking or allowing reception of the service signal transmitted from each of the plurality of RSDs (120) through the set radio resource according to the allocation information.

5. The method of any one of claims 1 to 4, wherein the selectively activating comprises:
selectively activating, by the node unit (130, 140, 150), the service signal corresponding to the set radio resource of each of the plurality of RSDs (120) by blocking or allowing routing of the service signal transmitted from each of the plurality of RSDs (120) to another node unit communicatively connected to the node unit (130, 140, 150) through the set radio resource according to the allocation information.

6. The method of any one of claims 1 to 5, wherein the selectively activating comprises:
selectively activating, by the node unit, the service signal corresponding to the set radio resource of each of the plurality of RSDs (120) by blocking or allowing each of the plurality of RSDs (120) to transmit the service signal to the node unit (130, 140, 150) through the set radio resource according to the allocation information.

7. The method of any one of claims 1 to 6, wherein the node unit (130, 140, 150) is a head-end unit (130) of the DAS (11, 12) communicatively connected to the at least one RSD (120).

8. The method of any one of claims 1 to 7, wherein the node unit (130, 140, 150) is a remote unit (140) of the DAS (11, 12) communicatively connected to the at least one RSD (120).

9. The method of any one of claims 1 to 8, wherein the node unit (130, 140, 150) and the system controller (110) are communicatively directly connected to each other.

10. The method of any one of claims 1 to 9, wherein the node unit (130, 140, 150) and the system controller (110) are communicatively connected to each other via a management system entity (160).

11. A node unit (130, 140, 150) of a distributed antenna system, DAS (11, 12), interworking with a spectrum sharing system, SSS (10), the node unit (130, 140, 150) adapted to perform one or more steps according to one or more of claims 1 to 10.

## Patentansprüche

1. Verfahren zum Betrieb eines verteilten Antennensystems, DAS (11, 12), das mit einem System zur gemeinsamen Nutzung des Spektrums, SSS (10), zusammenarbeitet, wobei das Verfahren **dadurch gekennzeichnet ist, dass**
Einstellen, durch eine Knoteneinheit (130, 140, 150) des DAS (11, 12), einer Funkressource, die von jedem einer Vielzahl von Funkdienstgeräten, RSDs (120), die kommunikativ mit der Knoteneinheit (130, 140, 150) verbunden sind, verwendet werden soll;
Anfordern von Informationen über verfügbare Funkressourcen von einem Systemcontroller (110) des SSS (10) durch die Knoteneinheit (130, 140, 150), basierend auf einem Ergebnis der Einstellung;
Empfangen, durch die Knoteneinheit (130, 140, 150), von Zuweisungsinformationen, die ein Ergebnis der Zuweisung von gemeinsam genutzten Funkressourcen des SSS (10) an das DAS (11, 12) enthalten, von der Systemsteuerung (110); und
selektives Aktivieren, durch die Knoteneinheit (130, 140, 150), eines Dienstsignals, das der eingestellten Funkressource jeder der Vielzahl von RSDs (120) entspricht, gemäß der Zuweisungsinformation.

2. Verfahren nach Anspruch 1, wobei die Einstellung der Funkressource umfasst:
Einstellen, durch die Knoteneinheit (130, 140, 150), von mindestens einem einer Vielzahl von Kanälen mit unterschiedlichen Frequenzbändern als eine Funkressource, die von jedem der Vielzahl von RSDs (120) verwendet werden soll.

3. Verfahren nach Anspruch 1 oder 2, wobei das Anfordern der Informationen über die verfügbaren Funkressourcen Folgendes umfasst:
Erzeugen, durch die Knoteneinheit (130, 140, 150), von Informationen über Funkressourcen, die von dem DAS (11, 12) unterstützt werden, basierend auf dem Ergebnis der Einstellung; und
Anfordern der Informationen über die verfügbaren Funkressourcen von der Systemsteuerung (110) durch die Knoteneinheit (130, 140, 150), basierend auf den Informationen über die vom DAS (11, 12) unterstützten Funkressourcen.

4. Verfahren nach einem der Ansprüche 1 bis 3, wobei das selektive Aktivieren umfasst:
selektives Aktivieren, durch die Knoteneinheit (130, 140, 150), des Dienstsignals, das der eingestellten Funkressource jeder der Mehrzahl von RSDs (120) entspricht, durch Blockieren oder Zulassen des Empfangs des Dienstsignals, das von jeder der Mehrzahl von RSDs (120) über die eingestellte Funkressource gemäß der Zuweisungsinformation übertragen wird.

5. Verfahren nach einem der Ansprüche 1 bis 4, wobei das selektive Aktivieren umfasst:
selektives Aktivieren, durch die Knoteneinheit (130, 140, 150), des Dienstsignals, das der eingestellten Funkressource jeder der Vielzahl von RSDs (120) entspricht, durch Blockieren oder Zulassen der Weiterleitung des Dienstsignals, das von jeder der Vielzahl von RSDs (120) zu einer anderen Knoteneinheit übertragen wird, die kommunikativ mit der Knoteneinheit (130, 140, 150) über die eingestellte Funkressource gemäß der Zuweisungsinformation verbunden ist.

6. Verfahren nach einem der Ansprüche 1 bis 5, wobei das selektive Aktivieren umfasst:
selektives Aktivieren, durch die Knoteneinheit, des Dienstsignals, das der eingestellten Funkressource jeder der Vielzahl von RSDs (120) entspricht, durch Blockieren oder Zulassen, dass jede der Vielzahl von RSDs (120) das Dienstsignal an die Knoteneinheit (130, 140, 150) durch die eingestellte Funkressource gemäß der Zuweisungsinformation überträgt.

7. Verfahren nach einem der Ansprüche 1 bis 6, wobei die Knoteneinheit (130, 140, 150) eine Kopfstelleneinheit (130) des DAS (11, 12) ist, die kommunikativ mit dem mindestens einen RSD (120) verbunden ist.

8. Verfahren nach einem der Ansprüche 1 bis 7, wobei die Knoteneinheit (130, 140, 150) eine entfernte Einheit (140) des DAS (11, 12) ist, die mit dem mindestens einen RSD (120) kommunikativ verbunden ist.

9. Verfahren nach einem der Ansprüche 1 bis 8, wobei die Knoteneinheit (130, 140, 150) und die Systemsteuerung (110) kommunikativ direkt miteinander verbunden sind.

10. Verfahren nach einem der Ansprüche 1 bis 9, wobei die Knoteneinheit (130, 140, 150) und der Systemcontroller (110) über eine Managementsystemeinheit (160) kommunikativ miteinander verbunden sind.

11. Knoteneinheit (130, 140, 150) eines verteilten Antennensystems, DAS (11, 12), die mit einem System zur gemeinsamen Nutzung des Spektrums, SSS (10), zusammenarbeitet, wobei die Knoteneinheit (130, 140, 150) angepasst ist, um einen oder mehrere Schritte gemäß einem oder mehreren der Ansprüche 1 bis 10 durchzuführen.

## Revendications

1. Procédé de fonctionnement d'un système d'antennes distribuées, DAS (11, 12), coopérant avec un système de partage de spectre, SSS (10), le procédé étant **caractérisé par**:
le réglage, par une unité de noeuds (130, 140, 150) du DAS (11, 12), d'une ressource radio à utiliser par chacun d'une pluralité de dispositifs de services radio, RSD (120), en communication avec l'unité de noeuds (130, 140, 150);
la demande, par l' unité de noeuds (130, 140, 150), d'informations de ressources radio disponibles provenant d'un contrôleur de système (110) du SSS (10) en fonction d'un résultat du réglage;
la réception, par l'unité de noeuds (130, 140, 150), d'informations d'attribution comprenant un résultat d'attribution de ressources radio partagées du SSS (10) au DAS (11, 12) provenant du contrôleur de système (110); et
l'activation sélective, par l'unité de noeuds (130, 140, 150), d'un signal de service correspondant à la ressource radio réglée de chacun de la pluralité de RSD (120) conformément aux informations d'attribution.

2. Procédé selon la revendication 1, dans lequel le réglage de la ressource radio comprend:
Le réglage, par l'unité de noeuds (130, 140, 150), d'au moins l'un parmi une pluralité de canaux ayant différentes gammes de fréquences en tant que ressource radio devant être utilisée par chacun de la pluralité de RSD (120).

3. Procédé selon la revendication 1 ou 2, dans lequel la demande d'informations de ressource radio disponible comprend:
la génération, par l'unité de noeuds (130, 140, 150), d'informations concernant des ressources radio prises en charge par le DAS (11, 12) en fonction du résultat du réglage; et
la demande, par l'unité de noeuds (130, 140, 150), des informations de ressource radio disponibles provenant du contrôleur de système (110) en fonction des informations concernant des ressources radio prises en charge par le DAS (11, 12).

4. Procédé selon l'une quelconque des revendications 1 à 3, dans lequel l'activation sélective consiste à:
activer sélectivement, par l'unité de noeuds (130, 140, 150), du signal de service correspondant à la ressource radio réglée de chacun de la pluralité de RSD (120) par blocage ou par autorisation de réception du signal de service transmis à partir de chacun de la pluralité de RSD (120) par l'intermédiaire de la ressource radio réglée conformément aux informations d'attribution.

5. Procédé selon l'une quelconque des revendications 1 à 4, dans lequel l'activation sélective comprend:
l'activation sélective, par l'unité de noeuds (130, 140, 150), du signal de service correspondant à la ressource radio réglée de chacun de la pluralité de RSD (120) par blocage ou par autorisation de routage du signal de service transmis à partir de chacun de la pluralité de RSD (120) à une autre unité de noeuds en communication avec l'unité de noeuds (130, 140, 150) par l'intermédiaire de la ressource radio réglée conformément aux informations d'attribution.

6. Procédé selon l'une quelconque des revendications 1 à 5, dans lequel l'activation sélective consiste à:
activer sélectivement, par l'unité de noeuds, le signal de service correspondant à la ressource radio réglée de chacun de la pluralité de RSD (120) par blocage ou par autorisation de chacun de la pluralité de RSD (120) pour transmettre le signal de service à l'unité de noeuds (130, 140, 150) par l'intermédiaire de la ressource radio réglée conformément aux informations d'attribution.

7. Procédé selon l'une quelconque des revendications 1 à 6, dans lequel l'unité de noeuds (130, 140, 150) est une unité de centre distributeur (130) du DAS (11, 12) en communication avec l'au moins un RSD (120).

8. Procédé selon l'une quelconque des revendications 1 à 7, dans lequel l'unité de noeuds (130, 140, 150) est une unité distante (140) du DAS (11, 12) en communication avec l'au moins un RSD (120).

9. Procédé selon l'une quelconque des revendications 1 à 8, dans lequel l'unité de noeuds (130, 140, 150) et le contrôleur de système (110) sont en communication directe l'un avec l'autre.

10. Procédé selon l'une quelconque des revendications 1 à 9, dans lequel l'unité de noeuds (130, 140, 150) et le contrôleur de système (110) sont en communication l'un avec l'autre par l'intermédiaire d'une entité de système de gestion (160).

11. Unité de noeuds (130, 140, 150) d'un système d'antennes distribuées, DAS, (11, 12), coopérant avec un système de partage de spectre, SSS (10), l'unité de noeuds (130, 140, 150) étant conçue pour exécuter une ou plusieurs étapes selon l'une ou plusieurs des revendications 1 à 10.
